# FASCICULE DE BREVET EUROPEEN

(11) **EP 4 652 020 B1**
(45) Date de publication et mention de la délivrance du brevet: **11.11.2026**
(21) Numéro de dépôt: 24700815.4
(22) Date de dépôt: 18.01.2024
(51) Int. Cl.: B25J 11/00, B25J 15/00, B25J 19/00, A01D 46/30, A01D 45/00

(54) **OUTIL POUR PINCER ET COUPER UNE TIGE D'UNE PLANTE**
WERKZEUG ZUM QUETSCHEN UND SCHNEIDEN EINES STAMMS EINER PFLANZE
TOOL FOR PINCHING AND CUTTING A STEM OF A PLANT

(30) Priorité: 19.01.2023 FR 2300519
(43) Date de publication de la demande: 26.11.2025
(73) Titulaire: Aisprid, 35400 Saint-Malo (FR)
(72) Inventeur: DUBOST-VEDRENNE, Brice, 35400 Saint-Malo (FR); HANNOUSH, Pierre-Edouard, 35400 Saint-Malo (FR); MABIT, Pierre, 35400 Saint-Malo (FR); OMÉ, Valentin, 35400 Saint-Malo (FR); SALMON, Nicolas, 35400 Saint-Malo (FR)
(74) Mandataire: Cabinet Le Guen Maillet
(86) Numéro de dépôt international: PCT/EP2024/051097
(87) Numéro de publication internationale: WO 2024/153726

(56) Documents cités:
- CN-A- 110 603 976
- CN-U- 210 746 116
- JP-A- 2021 093 968

## Description

### DOMAINE TECHNIQUE

La présente invention concerne un outil qui est destiné à être monté sur un bras d'un robot et qui permet de pincer et de couper une tige d'une plante, telle que la tige d'une feuille d'un plant de tomates. L'invention concerne également un robot équipé d'un tel outil.

### ÉTAT DE LA TECHNIQUE ANTÉRIEURE

Le maraîchage est de plus en plus automatisé afin de faciliter le travail de l'exploitant. Il est ainsi connu d'utiliser un robot qui comporte un bras muni d'un outil permettant de couper la tige d'une feuille, par exemple d'un plant de tomates.

Par exemple, le document EP-A-2 265 107 divulgue un outil qui comporte deux éléments rotatifs qui sont à l'opposé l'un de l'autre pour pincer une tige pendant qu'une lame est translatée pour la couper.

Un tel dispositif est relativement complexe puisqu'il nécessite la gestion de plusieurs mouvements simultanément, à savoir les mouvements de rotation et le mouvement de translation.

Le document CN 110603976 A divulgue également un outil de pincement et de coupe d'une tige ayant une cinématique assez complexe.

Il est donc souhaitable de trouver un arrangement qui simplifie la cinématique.

### EXPOSÉ DE L'INVENTION

Un objet de la présente invention est de proposer un outil destiné à être monté sur un bras d'un robot et qui permet de pincer et de couper une tige d'une plante, tout en présentant une cinématique simple et robuste.

À cet effet, est proposé un outil de pincement et de coupe d'une tige portée par une tige principale destiné à être fixé à un bras d'un robot, ledit outil présentant un axe longitudinal et comportant :
- une base destinée à être fixée audit bras,
- une lame et une contre-lame,
- un mât et un contre-mât qui sont agencés sur la base, et
- un premier système de motorisation agencé pour déplacer au moins l'un parmi le mât et le contre-mât entre une position rapprochée dans laquelle le mât et le contre-mât sont rapprochés de manière à pincer la tige, et une position éloignée dans laquelle le mât et le contre-mât sont écartés pour permettre le passage de la tige, et
- un deuxième système de motorisation agencé pour déplacer en rotation la lame autour dudit axe longitudinal entre une position rapprochée dans laquelle la lame et la contre-lame sont rapprochées de manière à couper la tige, et une position éloignée dans laquelle la lame et la contre-lame sont disposées en face l'une de l'autre de part et d'autre de l'axe longitudinal, l'outil étant caractérisé en ce que la contre-lame est montée fixe par rapport à la base, en ce que l'outil comporte un doigt solidaire de la base et s'étendant parallèlement à l'axe longitudinal, où la lame présente une extrémité libre à l'opposé de la base, et en ce que le doigt s'étend au-delà de l'extrémité libre de la lame et présente un rebord intérieur qui s'étend vers l'intérieur pour recouvrir l'extrémité libre de la lame en position éloignée.

Avantageusement, le doigt est le contre-mât.

Avantageusement, l'outil comporte un doigt additionnel solidaire de la base et s'étendant parallèlement à l'axe longitudinal, où le mât présente une extrémité libre à l'opposé de la base, et le doigt additionnel s'étend au-delà de l'extrémité libre du mât et présente un rebord intérieur qui s'étend vers l'intérieur pour recouvrir l'extrémité libre de la lame en position éloignée. Avantageusement, l'extrémité libre du contre-mât et l'extrémité libre du mât ou l'extrémité libre du doigt additionnel s'il existe, présentent des surfaces qui forment une ouverture en biseau. Avantageusement, le contre-mât présente, au niveau d'une partie avant de l'outil, une première face de contact destinée à venir en contact avec la tige principale, le mât ou le doigt additionnel s'il existe présente, au niveau de la partie avant, une deuxième face de contact destinée à venir en contact avec la tige principale, l'outil présente entre le contre-mât et le mât ou le doigt additionnel s'il existe, au niveau de la partie avant, une troisième face de contact destinée à venir en contact avec la tige, chaque face de contact est équipée d'un capteur de contact et chaque capteur de contact est arrangé pour transmettre une information représentative d'un contact ou d'une absence de contact à une unité de contrôle du robot.

Avantageusement, le contre-mât présente au niveau de la surface formant l'ouverture en biseau, une quatrième face de contact, le mât ou le doigt additionnel s'il existe, présente au niveau de la surface formant l'ouverture en biseau, une cinquième face de contact, la quatrième et la cinquième faces de contact sont équipées d'un capteur de contact et chaque capteur de contact est arrangé pour transmettre une information représentative d'un contact ou d'une absence de contact à l'unité de contrôle du robot.

Selon un mode de réalisation particulier, l'un parmi le premier ou le deuxième système de motorisation comporte un premier moteur avec un premier arbre creux et parallèle à l'axe longitudinal et l'autre parmi le deuxième ou le premier système de motorisation comporte un deuxième moteur avec un deuxième arbre parallèle à l'axe longitudinal et enfilé à l'intérieur du premier arbre, où l'un parmi le premier arbre ou le deuxième arbre est solidaire de la lame et l'autre parmi le deuxième arbre ou le premier arbre est solidaire du mât.

Avantageusement, le premier système de motorisation et le deuxième système de motorisation forment un unique système de motorisation qui comporte :
- un moteur fixé à la base et présentant un arbre moteur parallèle à l'axe longitudinal et où la lame est solidaire de l'arbre moteur,
- un sabot monté libre en rotation autour de l'axe longitudinal par rapport à l'arbre moteur et portant le mât,
- un système limiteur arrangé pour autoriser la rotation du sabot (306) par rapport à l'arbre moteur entre une première position et une deuxième position et en interdisant la rotation au-delà de ces deux positions, et
- un élément de rappel contraignant le retour du sabot dans la première position.

Selon un mode de réalisation particulier, le système limiteur comporte un pion solidaire de l'arbre moteur et une rainure en arc de cercle coaxiale avec l'axe longitudinal et réalisée dans le sabot et le pion est logé dans la rainure.

Selon un mode de réalisation particulier, le système limiteur comporte un pion solidaire du sabot et une rainure en arc de cercle coaxiale avec l'axe longitudinal et réalisée dans l'arbre moteur et le pion est logé dans la rainure.

Avantageusement, l'arbre moteur présente, du côté du sabot, une rainure cylindrique qui est coaxiale avec l'axe longitudinal et qui débouche en regard du sabot, et l'élément de rappel prend la forme d'un ressort de torsion dont les spires sont logées dans la rainure cylindrique et dont les deux branches sont logées, pour la première, dans un premier alésage prévu dans l'arbre moteur et, pour la deuxième, dans un deuxième alésage prévu dans le sabot.

Avantageusement, la face du mât et la face du contre-mât qui sont prévues pour venir en appui contre la tige présentent des stries parallèles à l'axe longitudinal.

Selon un mode de réalisation particulier, le premier système de motorisation comporte un moteur et un moyen de mesure arrangé pour mesurer la quantité de courant électrique consommée par ledit moteur et pour transmettre une information représentative de cette mesure à une unité de contrôle du robot.

L'invention propose également un robot comportant un bras et un outil selon l'une des variantes précédentes, fixé par sa base au bras.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
Fig. 1 montre une vue en perspective d'un outil selon un premier mode de réalisation de l'invention,
Fig. 2 montre une vue en perspective de l'outil de la Fig. 1 selon un autre angle de vue,
Fig. 3 montre une vue en perspective de l'outil de la Fig. 1 sans son carter,
Fig. 4 montre une vue de face de l'outil selon l'axe longitudinal X de la Fig. 1 dans une position d'attente,
Fig. 5 montre une vue similaire à celle de la Fig. 4 dans une position de rotation intermédiaire,
Fig. 6 montre une vue similaire à celle de la Fig. 4 dans une position de pincement,
Fig. 7 montre une vue similaire à celle de la Fig. 4 dans une position de coupe,
Fig. 8 montre une vue en coupe par un plan axial d'un outil selon un deuxième mode de réalisation de l'invention,
Fig. 9 montre une vue en perspective de l'outil de la Fig. 8 sans son carter et son sabot,
Fig. 10 montre une vue de face d'un outil selon un troisième mode de réalisation de l'invention et vu selon son axe longitudinal X, et
Fig. 11 est une représentation schématique d'un exemple de motorisation.

### EXPOSÉ DÉTAILLÉ DE MODES DE RÉALISATION

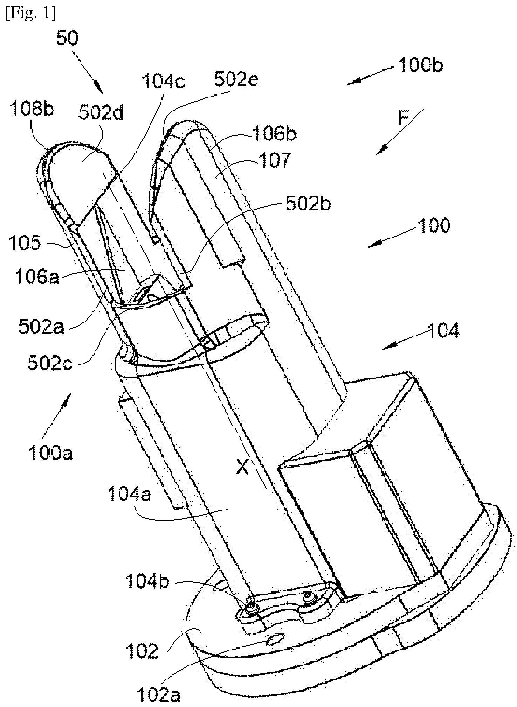

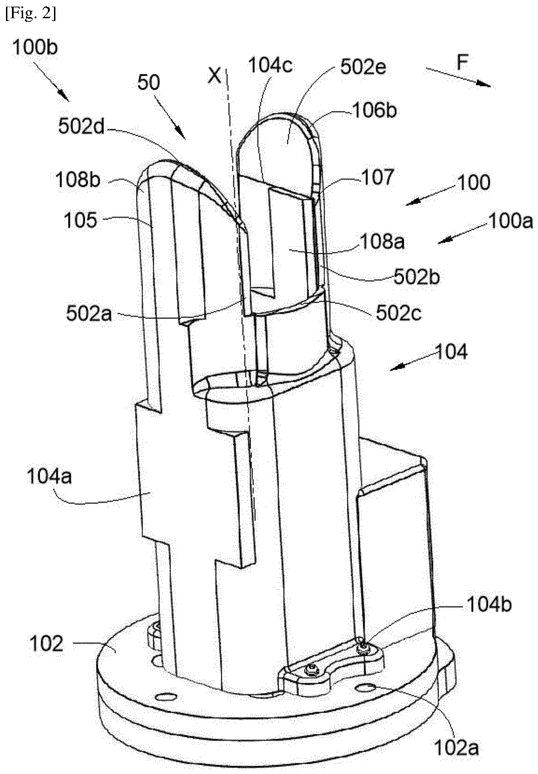

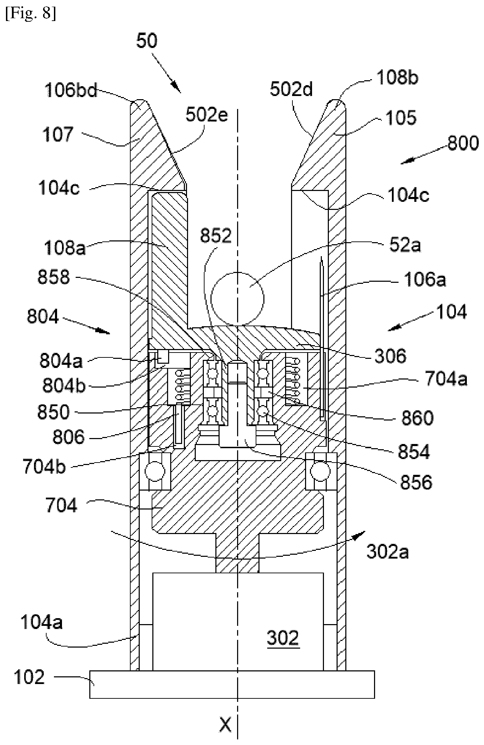

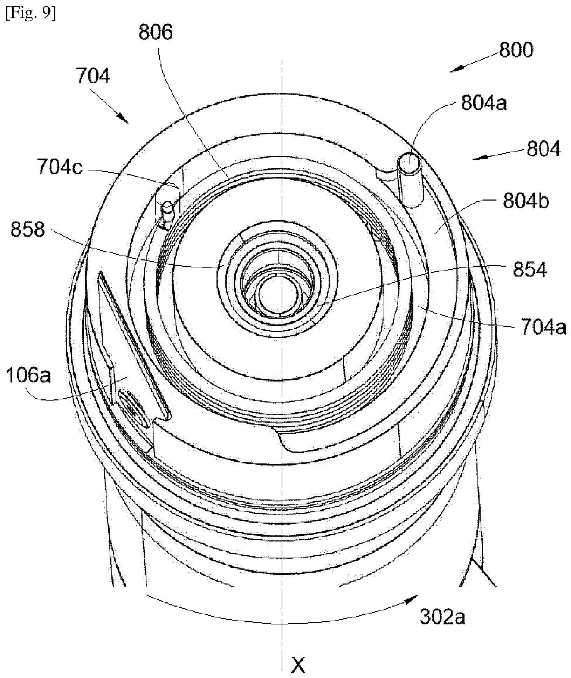

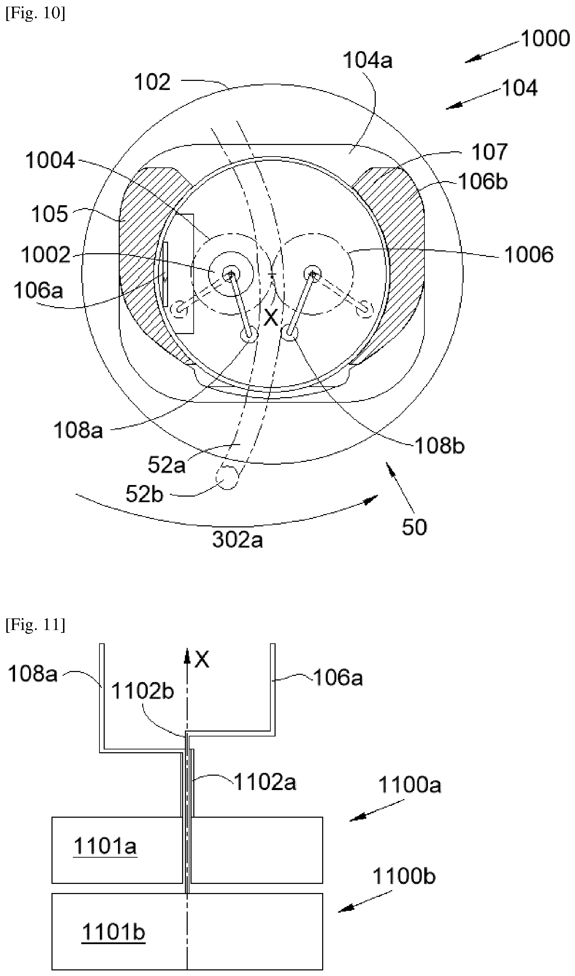

Les Figs. 1 à 7 montrent un outil 100 selon un premier mode de réalisation de l'invention. Les Figs. 8 et 9 montrent un outil 800 selon un deuxième mode de réalisation de l'invention. La Fig. 10 montre un outil 1000 selon un troisième mode de réalisation de l'invention.

Pour chaque mode de réalisation, l'outil 100, 800, 1000 assure le pincement d'une tige 52a et sa coupe pour la séparer d'une tige principale 52b portant ladite tige 52a. L'outil est destiné à être fixé à un bras d'un robot qui comporte une unité de contrôle agencée pour commander le déplacement dudit bras en fonction d'informations qu'il reçoit et grâce à des moteurs que le robot comporte à cet effet.

L'outil 100, 800, 1000 présente un axe longitudinal X et comporte une base 102 fixée au bras du robot, une lame 106a, une contre-lame 106b, un mât 108a et un contre-mât 108b.

La base 102, qui est ici une platine, est fixée au bras du robot, par exemple par des vis de fixation à travers des alésages 102a prévus à cet effet. Un tel robot et une telle fixation ne seront pas décrits plus précisément, et l'homme du métier pourra adapter le type de fixation au robot utilisé. La contre-lame 106b est montée fixe par rapport à la base 102 et le mât 108a et le contre-mât 108b sont agencés sur la base 102 selon différentes implantations décrites ci-dessous.

L'outil 100, 800, 1000 comporte également un premier système de motorisation agencé pour déplacer au moins l'un parmi le mât 108a et le contre-mât 108b entre une position rapprochée dans laquelle le mât 108a et le contre-mât 108b sont rapprochés de manière à pincer la tige 52a, et une position éloignée dans laquelle le mât 108a et le contre-mât 108b sont écartés pour permettre le passage de la tige 52a. Dans le premier et le deuxième modes de réalisation de l'invention, seul le mât 108a est mobile, tandis que dans le troisième mode de réalisation, le mât 108a et le contre-mât 108b sont mobiles.

L'outil 100, 800, 1000 comporte également un deuxième système de motorisation agencé pour déplacer en rotation la lame 106a autour dudit axe longitudinal X entre une position rapprochée dans laquelle la lame 106a et la contre-lame 106b sont rapprochées de manière à couper la tige 52a, et une position éloignée dans laquelle la lame 106a et la contre-lame 106b sont disposées en face l'une de l'autre de part et d'autre de l'axe longitudinal X.

Dans le premier, le deuxième et le troisième modes de réalisation de l'invention, le premier système de motorisation et le deuxième système de motorisation forment un unique système de motorisation. La Fig. 11 montre un mode de réalisation particulier de l'invention avec deux systèmes de motorisation différents.

L'outil 100, 800, 1000 comporte un carter 104 qui comporte une jupe 104a qui se fixe à la base 102, ici à l'aide de vis de fixation 104b.

Dans le mode de réalisation de l'invention présenté aux Figs. 1 à 10, l'outil 100, 800, 1000 comporte un doigt 105 solidaire de la base 102 et s'étendant parallèlement à l'axe longitudinal X. La lame 106a présente une extrémité libre à l'opposé de la base 102, et le doigt 105 s'étend au-delà de l'extrémité libre de la lame 106a et présente un rebord intérieur 104c qui s'étend vers l'intérieur pour recouvrir l'extrémité libre de la lame 106a en position éloignée. Ainsi, lorsque l'outil 100, 800, 1000 est déplacé entre deux tiges, la lame 106a est recouverte et n'entre pas en collision avec la plante et ne va donc pas l'abîmer.

Dans le premier et le deuxième modes de réalisation de l'invention, le doigt 105 constitue le contre-mât 108b.

Dans les trois modes de réalisation, la contre-lame 106b est constituée par un doigt additionnel 107 qui est également solidaire de la base 102 et s'étendant parallèlement à l'axe longitudinal X. Dans les modes de réalisation présentés, le doigt 105 et le doigt additionnel 107 sont des extensions du carter 104 et ils s'étendent l'un en face de l'autre de part et d'autre de l'axe longitudinal X dans le prolongement de la jupe 104a à l'opposé de la base 102.

Dans les deux premiers modes de réalisation, comme pour la lame 106a, le mât 108a présente une extrémité libre à l'opposé de la base 102 et le doigt additionnel 107 s'étend au-delà de l'extrémité libre du mât 108a et présente un rebord intérieur 104c qui s'étend vers l'intérieur pour recouvrir l'extrémité libre du mât 108a en position éloignée.

Dans les deux premiers modes de réalisation, le mât 108a et le contre-mât 108b s'étendent parallèlement à l'axe longitudinal X et délimitent entre eux une fente 50 dans laquelle la tige 52a se place. La fente 50 présente une section en U s'étendant perpendiculairement à l'axe longitudinal X et s'enfonce dans l'outil 100, 800 parallèlement à l'axe longitudinal X.

Dans les modes de réalisation de l'invention présentés ici, le doigt 105 et le doigt additionnel 107 présentent chacun, autour de l'axe longitudinal X, une étendue angulaire de l'ordre de 97° et chaque ouverture de la fente 50 présente, autour de l'axe longitudinal X, une étendue angulaire de l'ordre de 84°.

Lorsqu'une tige 52a doit être coupée, le robot dirige son bras de manière à approcher l'outil 100, 800, 1000 de la tige 52a pour la placer dans la fente 50 entre le mât 108a et le contre-mât 108b. À cette fin, le robot comporte un système de vision capable de repérer les tiges 52a à couper et de déplacer son bras en fonction de ce que voit le système de vision. Les moyens pour réaliser de telles actions sont connus de l'homme du métier, par exemple dans le document « A Harvesting Robot for Small Fruit in Bunches Based on 3-D Stereoscopic Vision » de Paula Tarrio, Ana M. Bernardos, José R. Casar and Juan A. Besada.

Le contre-mât 108b et le doigt additionnel 107 présentent chacun une extrémité libre à l'opposé de la base 102.

Dans les deux premiers modes de réalisation, pour faciliter l'introduction de la tige 52a dans la fente 50, l'extrémité libre du contre-mât 108b, ici du doigt 105, et l'extrémité libre du doigt additionnel 107 présentent des surfaces qui forment une ouverture en biseau qui se rétrécit en pénétrant dans l'outil 100, 800.

Lorsque le doigt additionnel 107 n'est pas présent, l'ouverture en biseau est réalisée entre des surfaces de l'extrémité libre du contre-mât 108b et de l'extrémité libre du mât 108a.

À ces fins, l'extrémité libre du contre-mât 108b et selon le cas, l'extrémité libre du doigt additionnel 107 ou du mât 108a présente une face qui présente avec l'axe longitudinal X, un angle aigu qui est compris par exemple entre 20° et 60°.

Dans le premier et le deuxième modes de réalisation, l'outil 100, 800, la lame 106a et le mât 108a sont en face l'un de l'autre de part et d'autre de l'axe longitudinal X en position éloignée.

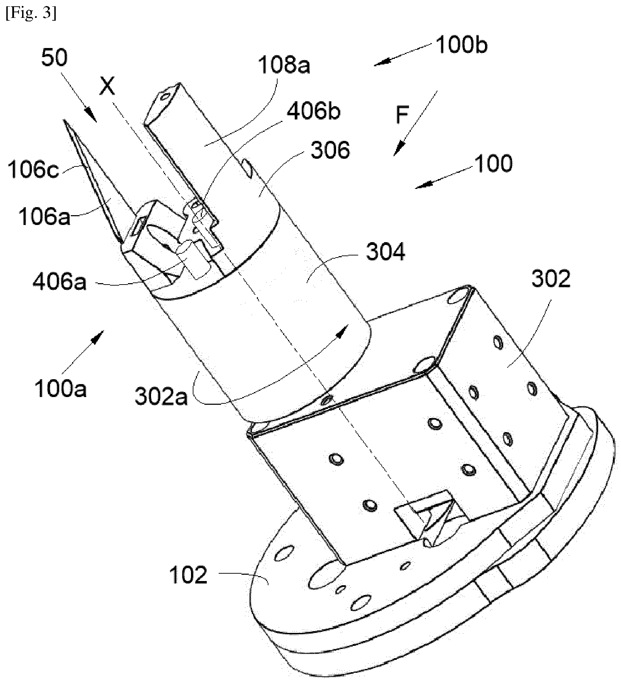

La Fig. 3 montre l'outil 100 selon le premier mode de réalisation sans le carter 104.

Dans les deux premiers modes de réalisation de l'invention, le système de motorisation unique comporte un moteur 302 avec un arbre moteur 304, 704 dont l'axe est l'axe longitudinal X et un sabot 306. Le moteur 302 est fixé à la base 102. Dans le mode de réalisation de l'invention présenté ici, l'arbre moteur 304, 704 prend la forme d'une colonne.

L'arbre moteur 304, 704 est ainsi mobile en rotation autour de l'axe longitudinal X lorsque le moteur 302 est en fonctionnement. Dans le mode de réalisation de l'invention présenté ici, le sens de rotation du moteur 302 est représenté par la flèche 302a.

Le moteur 302, l'arbre moteur 304, 704 et le sabot 306 sont logés à l'intérieur du carter 104. Le moteur 302, l'arbre moteur 304, 704 et le sabot 306 constituent dans cet ordre un empilement le long de l'axe longitudinal X.

Comme cela est expliqué ci-dessous, l'arbre moteur 304, 704 et le sabot 306 sont mobiles en rotation autour de l'axe longitudinal X à l'intérieur de la jupe 104a du carter 104 et, préférentiellement, chacun présente une surface extérieure cylindrique coaxiale avec l'axe longitudinal X qui loge dans la jupe 104a dont la surface intérieure est également cylindrique et coaxiale avec l'axe longitudinal X.

La lame 106a est solidaire de l'arbre moteur 304, 704 et présente son tranchant 106c vers l'avant par rapport au sens de rotation 302a.

Le mât 108a est solidaire du sabot 306 qui est monté libre en rotation autour de l'axe longitudinal X par rapport à l'arbre moteur 304.

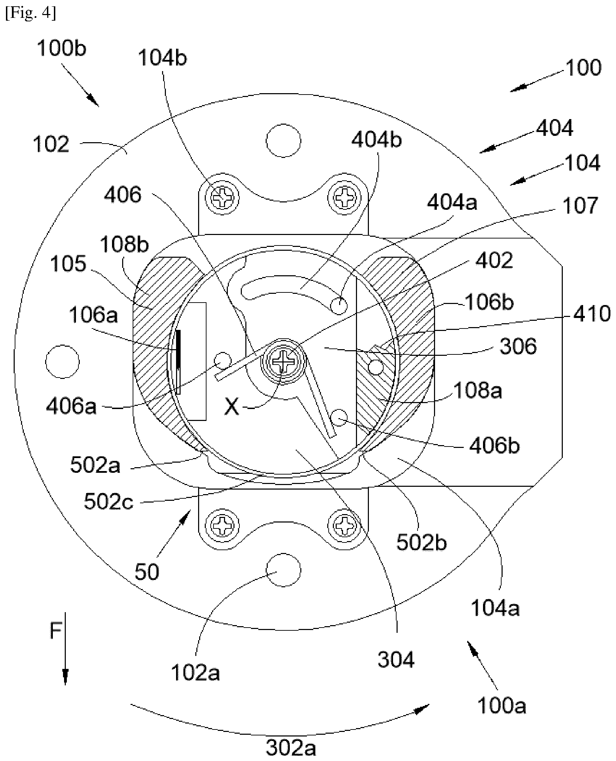

Les Figs. 4 à 7 montrent différentes étapes de fonctionnement lors de la rotation du moteur 302 dans le cadre du premier mode de réalisation de l'invention mais qui s'applique d'une manière générale également au deuxième mode de réalisation de l'invention.

Le sabot 306 est mobile en rotation par rapport à l'arbre moteur 304, 704 entre une première position (Fig. 4) et une deuxième position qui sont déterminées par un système limiteur 404, 804 qui permet la rotation du sabot 306 par rapport à l'arbre moteur 304, 704 entre la première position et la deuxième position en interdisant la rotation au-delà de ces deux positions. Dans le premier mode de réalisation de l'invention, la fixation du sabot 306 sur l'arbre moteur 304 est assurée ici par un axe central 402 coaxial avec l'axe longitudinal X. Dans le mode de réalisation de l'invention présenté ici, l'axe central 402 est une vis qui traverse le sabot 306 et se visse dans l'arbre moteur 304 et qui n'est pas serrée pour permettre la libre rotation du sabot 306. Selon un autre mode de réalisation non représenté, l'axe central 402 peut prendre la forme d'un palier sur lequel le sabot 306 est emmanché et qui est fixé par une vis sur l'arbre moteur 304.

L'outil 100, 800 comporte un élément de rappel 406, 806 qui est ici monté sur l'arbre moteur 304, 704 et qui contraint le retour du sabot 306 dans la première position, c'est-à-dire que l'élément de rappel 406, 806 tend à ramener le sabot 306 dans la première position lorsque ce dernier s'en éloigne.

Dans le premier mode de réalisation de l'invention présenté sur la Fig. 4, le système limiteur 404 comporte un pion 404a solidaire de l'arbre moteur 304 et une rainure 404b en arc de cercle coaxiale avec l'axe longitudinal X et réalisée dans le sabot 306, où le pion 404a est logé dans la rainure 404b. La première position et la deuxième position sont déterminées par la mise en butée du pion 404a contre les extrémités de la rainure 404b qui présente une étendue angulaire limitée.

La première position correspond au moment où le moteur 302 n'est pas en fonctionnement et où le mât 108a est écarté du contre-mât 108b pour laisser passer la tige 52a. La deuxième position correspond au moment où le mât 108a est rapproché du contre-mât 108b sans qu'une tige 52a ne soit présente entre eux. Lorsqu'une tige 52a est présente, la deuxième position n'est pas forcément atteinte du fait du blocage en rotation du sabot 306 par rapport à l'arbre moteur 304. La première position correspond à une position d'attente dans laquelle le moteur 302 est à l'arrêt. Dans cette position, la lame 106a et le mât 108a sont alignés de part et d'autre de l'axe longitudinal X entre les doigts 105 et 107 en laissant la fente 50 dégagée.

Dans le mode de réalisation de l'invention présenté ici, l'élément de rappel 406 est un ressort de torsion dont les spires sont fixées de manière coaxiale avec l'axe longitudinal X, ici sous la tête de la vis constituant ici l'axe central 402 et dont les branches, qui sont ici des branches tangentes, sont mises en contrainte entre un premier plot 406a solidaire de l'arbre moteur 304 et un second plot 406b solidaire du sabot 306.

Selon un autre mode de réalisation non représenté, l'élément de rappel 406 est un ressort de traction dont une extrémité est solidaire du pion 404a et du deuxième plot 406b. Tout autre élément équivalent peut être envisagé.

Le fonctionnement est alors le suivant :
Lorsque le moteur 302 est mis en fonctionnement, l'arbre moteur 304 tourne dans le sens de rotation 302a en entraînant le pion 404a et le premier plot 406a. Du fait de l'action de l'élément de rappel 406, le sabot 306 pivote en même temps dans le même sens.

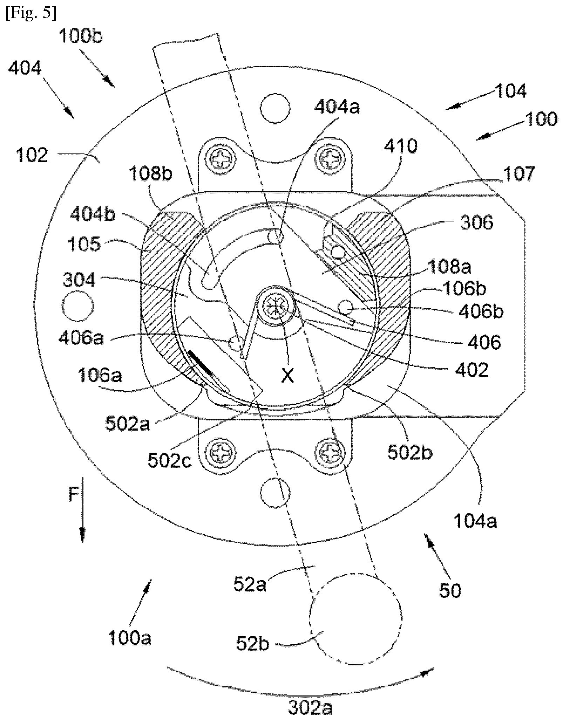

La Fig. 5 montre l'outil 100 avec une tige 52a placée dans la fente 50 et où l'arbre moteur 304 a commencé à tourner. Le sabot 306 suit la rotation de l'arbre moteur 304 tant que le mât 108a ne rencontre aucun obstacle. Au fur et à mesure de la rotation, le mât 108a et la lame 106a traversent les extrémités de la fente 50.

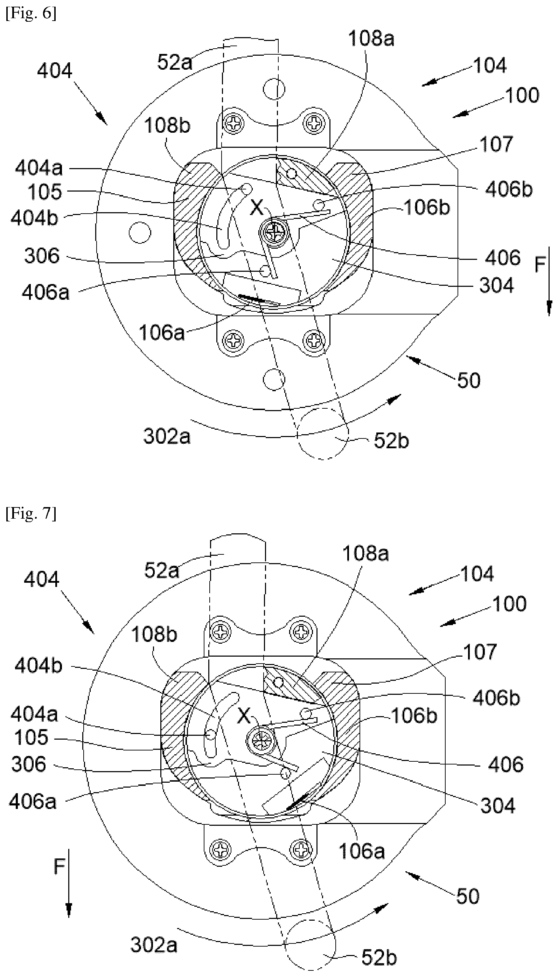

À la Fig. 6, le mât 108a heurte la tige 52a et la serre contre le contre-mât 108b opposé à son point de départ, ici le doigt 105. La rotation du sabot 306 est alors interrompue.

À la Fig. 7, la rotation de l'arbre moteur 304 se poursuit et le pion 404a se déplace à l'intérieur de la rainure 404b tandis que l'élément de rappel 406 se tend. Dans le même temps, la lame 106a poursuit sa rotation et coupe la tige 52a qui est bloquée par la contre-lame 106b, ici le doigt additionnel 107.

Lorsque la tige 52a est entièrement coupée. La préhension est assurée par le mât 108a et le contre-mât 108b. Le bras du robot portant l'outil 100, 800, 1000 peut alors être déplacé pour déposer la tige 52a coupée au niveau d'une position de dépose. Le moteur 302 ramène alors la lame 106a et le mât 108a dans leurs positions initiales par une rotation en sens inverse, ce qui libère le sabot 306 qui sous l'effet de l'élément de rappel 406 reprend sa position par rapport à l'arbre moteur 304 en le rattrapant dans sa rotation jusqu'à ce que le pion 404a retrouve la première position, et par conséquent la tige 52a tombe.

Le mécanisme est ainsi relativement simple et ne nécessite qu'un seul mouvement de rotation. Dans le deuxième mode de réalisation de l'invention, le système limiteur 804 comporte un pion 804a solidaire du sabot 306 et une rainure 804b en arc de cercle coaxiale avec l'axe longitudinal X et réalisée dans l'arbre moteur 304, où le pion 804a est logé dans la rainure 804b. La première position et la deuxième position sont déterminées par la mise en butée du pion 804a contre les extrémités de la rainure 804b qui présente une étendue angulaire limitée.

Dans le mode de réalisation de l'invention présenté aux Figs. 8 et 9, l'arbre moteur 704 présente, du côté du moteur 302, une extrémité proximale et, du côté du sabot 306, une extrémité distale. L'arbre moteur 704 présente du côté distal une rainure 704a cylindrique qui est coaxiale avec l'axe longitudinal X et qui débouche en regard du sabot 306.

L'élément de rappel 806 prend ici la forme d'un ressort de torsion dont les spires sont logées dans la rainure cylindrique 704a et dont les deux branches, qui sont ici des branches axiales, sont logées, pour la première, dans un premier alésage 704b prévu dans l'arbre moteur 704 au fond de la rainure cylindrique 704a et, pour la deuxième, dans un deuxième alésage 704c prévu dans le sabot 306 et représenté ici en traits fantômes sur la Fig. 8.

Dans ce mode de réalisation, l'élément de rappel 806 est donc protégé et le fonctionnement est identique à celui de l'élément de rappel 406 du premier mode de réalisation. Ainsi, lorsque l'arbre moteur 704 tourne, l'élément de rappel 806 entraîne le sabot 306 et, lorsque le mât 108a vient en butée contre une tige 52a, il se bloque et l'élément de rappel 806 se tend du fait que son extrémité, logée dans le premier alésage 704b, continue à tourner et, lorsque la tige 52a est coupée, elle peut être déposée comme précédemment, et après une rotation en sens inverse, l'élément de rappel 806 se détend, l'outil se réinitialise et la tige 52a tombe.

Dans le mode de réalisation de l'invention présenté à la Fig. 8, l'arbre moteur 704 présente un alésage central 850 coaxial avec l'axe longitudinal X et le sabot 306 présente un fût 852 qui s'insère dans l'alésage central 850.

La libre rotation du sabot 306 par rapport à l'arbre moteur 704 est réalisée ici par la mise en place de roulements à billes 854, ici au nombre de deux, entre le fût 852 et l'alésage central 850 et le maintien est assuré par une vis de serrage 856 qui se visse dans le fût 852. Les roulements à billes 854 sont alors pris en sandwich entre la tête de la vis de serrage 856 et un rebord 858 que l'arbre moteur 704 présente au niveau de son extrémité distale. Le rebord 858 ferme partiellement l'alésage central 850.

Ici, les deux roulements à billes 854 sont maintenus écartés l'un de l'autre par une entretoise 860. Dans le troisième mode de réalisation de l'invention, le système de motorisation unique est constitué d'un moteur 1002 dont l'arbre moteur est parallèle à l'axe longitudinal X et porte le mât 108a et un pignon meneur 1004. Le système de motorisation unique comporte également un pignon mené 1006 qui engrène avec le pignon meneur 1004 et qui porte le contre-mât 108b. sur la Fig. 10, le mât 108a et le contre-mât 108b sont représentés en traits pointillés en position éloignée et en traits pleins en position rapprochée autour de la tige 52a.

Le moteur 1002 peut également entraîner la lame 106a à travers un système de transmission approprié comme par exemple des engrenages, des courroies, etc.

La Fig. 11 montre un mode de réalisation avec deux systèmes de motorisation où l'un parmi le premier 1100a ou le deuxième 1100b système de motorisation (ici le premier 1100a) comporte un premier moteur 1101a avec un premier arbre 1102a creux et parallèle à l'axe longitudinal X et où l'autre parmi le deuxième 1100b ou le premier 1100a système de motorisation (ici le deuxième 1100b) comporte un deuxième moteur 1101b avec un deuxième arbre 1102b parallèle à l'axe longitudinal X et enfilé à l'intérieur du premier arbre 1102a. Dans ce mode de réalisation, l'un parmi le premier arbre 1102a ou le deuxième arbre 1102b (ici le deuxième 1102b) est solidaire de la lame 106a et l'autre parmi le deuxième arbre 1102b ou le premier arbre 1102a (ici le premier 1102a) est solidaire du mât 108a.

Lorsque la coupe n'a pas été effectuée correctement, il faut permettre le retrait de la tige 52a de la pince créée par le mât 108a et le contre-mât 108b. À cette fin, la face du mât 108a et la face du contre-mât 108b qui viennent en appui contre la tige 52a en position rapprochée présentent des stries 410 parallèles à l'axe longitudinal X.

Dans le mode de réalisation de l'invention présenté ici, la jupe 104a présente une surface extérieure globalement cylindrique autour de l'axe longitudinal X. Cette forme extérieure arrondie permet d'arriver au plus près de la tige principale et, lors de la mise en place de l'outil 100, en vu de la coupe de la tige 52a, une rotation de l'outil 100 autour de l'axe longitudinal X ne repousse pas la tige principale contrairement à une jupe de section rectangulaire.

L'alimentation électrique de chaque système de motorisation et la commande de chacun d'eux sont réalisées depuis le robot qui comporte une source d'énergie et l'unité de contrôle prévues à cet effet.

La description qui suit s'appuie plus particulièrement sur le premier mode de réalisation, mais elle s'applique aux autres modes de réalisation. Comme précisé ci-dessus, l'outil 100 présente une fente 50 délimitée entre le contre-mât 108b et le mât 108a ou le doigt additionnel (107) s'il existe, et cette fente 50 présente une section en U fermée du côté de la base 102 et ouverte à l'opposé au niveau des surfaces formant l'ouverture en biseau.

Pour améliorer le positionnement de l'outil 100 par rapport à la tige 52a à couper, l'outil 100 comporte des capteurs de contact disposé autour de la fente 50, tel qu'un capteur capacitif, un capteur de force, etc.

Lorsque l'outil 100 est amené en position contre une tige 52a, il est avancé selon une direction de déplacement F de manière à ce que lorsque la lame 106a coupe la tige 52a, la coupe soit réalisée au plus près de la tige principale 52b.

Du fait de cette direction de déplacement, l'outil 100 présente une partie avant 100a et une partie arrière 100b et la fente 50 s'étend entre la partie avant 100a et la partie arrière 100b.

Ainsi, le contre-mât 108b présente au niveau de la partie avant 100a, une première face de contact 502a qui est destinée à venir en contact avec la tige principale 52b et cette surface de contact est équipée d'un capteur de contact.

De la même manière, le mât 108a ou le doigt additionnel 107 s'il existe, présente au niveau de la partie avant 100a, une deuxième face de contact 502b qui est destinée à venir en contact avec la tige principale 52b et cette surface de contact est équipée d'un capteur de contact.

Ces deux capteurs de contact permettent de vérifier si l'outil 100 est bien positionné au plus près de la tige principale 52b.

Le système est complété par un autre capteur de contact qui est disposé au niveau d'une troisième face de contact 502c présente dans le fond de la fente 50 au niveau de la partie avant 100a, c'est-à-dire entre le contre-mât 108b et le mât 108a ou le doigt additionnel 107 s'il existe, et destinée à venir en contact avec la tige 52a. Ce capteur de contact permet de vérifier si la tige 52a à couper est bien au fond de la fente 50.

Les informations de contact ou d'absence de contact des différents capteurs de contact sont transmises à l'unité de contrôle du robot qui peut alors modifier le positionnement de son bras et donc de l'outil 100 pour que ce dernier soit correctement positionné par rapport à la tige 52a et à la tige principale 52b.

Pour faciliter l'introduction de la tige 52a dans l'ouverture en biseau, que le contre-mât 108b présente au niveau de la surface formant l'ouverture en biseau, une quatrième face de contact 502d, et le mât 108a ou le doigt additionnel 107 s'il existe, présente au niveau de la surface formant l'ouverture en biseau, une cinquième face de contact 502e.

La quatrième et la cinquième faces de contact 502d-e sont équipées chacune d'un capteur de contact et chaque capteur de contact est arrangé pour transmettre une information représentative d'un contact ou d'une absence de contact à l'unité de contrôle du robot. Avec ces informations, le robot sait où est la tige 52a par rapport à l'ouverture en biseau et peut déplacer son bras et donc l'outil 100 pour aligner l'ouverture en biseau avec la tige 52a.

Pour contrôler la pression exercée entre le mât 108a et le contre-mât 108b, le moteur du premier système de motorisation est équipé d'un moyen de mesure arrangé pour mesurer la quantité de courant électrique consommée par ledit moteur et pour transmettre l'information représentative de cette mesure à une unité de contrôle du robot. Ainsi, en fonction de l'information reçue, l'unité de contrôle sait si une tige 52a est effectivement en train d'être pincée ou non, et si une pression maximale a été atteinte, cette pression maximale dépendant du type de culture.

Pour faciliter le glissement de la tige 52a le long du fond de la fente 50, ledit fond est recouvert d'un dôme comme cela est représenté sur la Fig. 8, où le sabot 306 présente une forme arrondie.

## Revendications

1. Outil (100, 800, 1000) de pincement et de coupe d'une tige (52a) portée par une tige principale (52b) destiné à être fixé à un bras d'un robot, ledit outil (100, 800, 1000) présentant un axe longitudinal (X) et comportant :
- une base (102) destinée à être fixée audit bras,
- une lame (106a) et une contre-lame (106b),
- un mât (108a) et un contre-mât (108b) qui sont agencés sur la base (102), et
- un premier système de motorisation agencé pour déplacer au moins l'un parmi le mât (108a) et le contre-mât (108b) entre une position rapprochée dans laquelle le mât (108a) et le contre-mât (108b) sont rapprochés de manière à pincer la tige (52a), et une position éloignée dans laquelle le mât (108a) et le contre-mât (108b) sont écartés pour permettre le passage de la tige (52a), et
- un deuxième système de motorisation agencé pour déplacer en rotation la lame (106a) autour dudit axe longitudinal (X) entre une position rapprochée dans laquelle la lame (106a) et la contre-lame (106b) sont rapprochées de manière à couper la tige (52a), et une position éloignée dans laquelle la lame (106a) et la contre-lame (106b) sont disposées en face l'une de l'autre de part et d'autre de l'axe longitudinal (X),
l'outil (100, 800, 1000) étant **caractérisé en ce que** la contre-lame (106b) est montée fixe par rapport à la base (102), **en ce que** l'outil (100, 800, 1000) comporte un doigt (105) solidaire de la base (102) et s'étendant parallèlement à l'axe longitudinal (X), où la lame (106a) présente une extrémité libre à l'opposé de la base (102), et **en ce que** le doigt (105) s'étend au-delà de l'extrémité libre de la lame (106a) et présente un rebord intérieur (104c) qui s'étend vers l'intérieur pour recouvrir l'extrémité libre de la lame (106a) en position éloignée.

2. Outil (100, 800) selon la revendication 1, **caractérisé en ce que** le doigt (105) est le contre-mât (108b).

3. Outil (100, 800) selon l'une des revendications 1 ou 2, **caractérisé en ce qu'**il comporte un doigt additionnel (107) solidaire de la base (102) et s'étendant parallèlement à l'axe longitudinal (X), où le mât (108a) présente une extrémité libre à l'opposé de la base (102), et **en ce que** le doigt additionnel (107) s'étend au-delà de l'extrémité libre du mât (108a) et présente un rebord intérieur (104c) qui s'étend vers l'intérieur pour recouvrir l'extrémité libre de la lame (106a) en position éloignée.

4. Outil (100, 800) selon l'une des revendications 1 à 3, **caractérisé en ce que** l'extrémité libre du contre-mât (108b) et l'extrémité libre du mât (108a) ou l'extrémité libre du doigt additionnel (107) s'il existe, présentent des surfaces qui forment une ouverture en biseau.

5. Outil (100, 800) selon la revendication 3, **caractérisé en ce que** le contre-mât (108b) présente, au niveau d'une partie avant (100a) de l'outil (100, 800), une première face de contact (502a) destinée à venir en contact avec la tige principale (52b), **en ce que** le mât (108a) ou le doigt additionnel (107) s'il existe présente, au niveau de la partie avant (100a), une deuxième face de contact (502b) destinée à venir en contact avec la tige principale (52b), **en ce que** l'outil (100, 800) présente entre le contre-mât (108b) et le mât (108a) ou le doigt additionnel (107) s'il existe, au niveau de la partie avant (100a), une troisième face de contact (502c) destinée à venir en contact avec la tige (52a), **en ce que** chaque face de contact (502a-c) est équipée d'un capteur de contact et **en ce que** chaque capteur de contact est arrangé pour transmettre une information représentative d'un contact ou d'une absence de contact à une unité de contrôle du robot.

6. Outil (100, 800) selon la revendication 4, **caractérisé en ce que** le contre-mât (108b) présente au niveau de la surface formant l'ouverture en biseau, une quatrième face de contact (502d), **en ce que** le mât (108a) ou le doigt additionnel (107) s'il existe, présente au niveau de la surface formant l'ouverture en biseau, une cinquième face de contact (502e), **en ce que** la quatrième et la cinquième faces de contact (502d-e) sont équipées d'un capteur de contact et **en ce que** chaque capteur de contact est arrangé pour transmettre une information représentative d'un contact ou d'une absence de contact à l'unité de contrôle du robot.

7. Outil (100, 800) selon l'une des revendications 1 à 3, **caractérisé en ce que** l'un parmi le premier (1100a) ou le deuxième (1100b) système de motorisation comporte un premier moteur (1101a) avec un premier arbre (1102a) creux et parallèle à l'axe longitudinal (X) et **en ce que** l'autre parmi le deuxième (1100b) ou le premier (1100a) système de motorisation comporte un deuxième moteur (1101b) avec un deuxième arbre (1102b) parallèle à l'axe longitudinal (X) et enfilé à l'intérieur du premier arbre (1102a), où l'un parmi le premier arbre (1102a) ou le deuxième arbre (1102b) est solidaire de la lame (106a) et l'autre parmi le deuxième arbre (1102b) ou le premier arbre (1102a) est solidaire du mât (108a).

8. Outil (100, 800) selon l'une des revendications 1 à 6, **caractérisé en ce que** le premier système de motorisation et le deuxième système de motorisation forment un unique système de motorisation qui comporte :
- un moteur (302) fixé à la base (102) et présentant un arbre moteur (304, 704) parallèle à l'axe longitudinal (X) et où la lame (106a) est solidaire de l'arbre moteur (304, 704),
- un sabot (306) monté libre en rotation autour de l'axe longitudinal (X) par rapport à l'arbre moteur (304, 704) et portant le mât (108a),
- un système limiteur (404, 804) arrangé pour autoriser la rotation du sabot (306) par rapport à l'arbre moteur (304, 704) entre une première position et une deuxième position et en interdisant la rotation au-delà de ces deux positions, et
- un élément de rappel (406, 806) contraignant le retour du sabot (306) dans la première position.

9. Outil (100) selon la revendication 8, **caractérisé en ce que** le système limiteur (404) comporte un pion (404a) solidaire de l'arbre moteur (304) et une rainure (404b) en arc de cercle coaxiale avec l'axe longitudinal (X) et réalisée dans le sabot (306) et **en ce que** le pion (404a) est logé dans la rainure (404b).

10. Outil (800) selon la revendication 8, **caractérisé en ce que** le système limiteur (804) comporte un pion (804a) solidaire du sabot (306) et une rainure (804b) en arc de cercle coaxiale avec l'axe longitudinal (X) et réalisée dans l'arbre moteur (304) et **en ce que** le pion (804a) est logé dans la rainure (804b).

11. Outil (800) selon la revendication 10, **caractérisé en ce que** l'arbre moteur (704) présente, du côté du sabot (306), une rainure (704a) cylindrique qui est coaxiale avec l'axe longitudinal (X) et qui débouche en regard du sabot (306), et **en ce que** l'élément de rappel (806) prend la forme d'un ressort de torsion dont les spires sont logées dans la rainure cylindrique (704a) et dont les deux branches sont logées, pour la première, dans un premier alésage (704b) prévu dans l'arbre moteur (704) et, pour la deuxième, dans un deuxième alésage (704c) prévu dans le sabot (306).

12. Outil (100, 800) selon l'une des revendications 1 à 11, **caractérisé en ce que** la face du mât (108a) et la face du contre-mât (108b) qui sont prévues pour venir en appui contre la tige (52a) présentent des stries (410) parallèles à l'axe longitudinal (X).

13. Outil (100, 800, 1000) selon la revendication 1, **caractérisé en ce que** le premier système de motorisation comporte un moteur et un moyen de mesure arrangé pour mesurer la quantité de courant électrique consommée par ledit moteur et pour transmettre une information représentative de cette mesure à une unité de contrôle du robot.

14. Robot comportant un bras et un outil (100, 800, 1000) selon l'une des revendications précédentes, fixé au bras par sa base (102).

## Patentansprüche

1. Werkzeug (100, 800, 1000) zum Klemmen und Schneiden eines Stängels (52a), der von einem Hauptstängel (52b) getragen wird, das dazu bestimmt ist, an einem Arm eines Roboters befestigt zu sein, wobei das Werkzeug (100, 800, 1000) eine Längsachse (X) aufweist und Folgendes umfasst:
- eine Basis (102), die dazu bestimmt ist, an dem Arm befestigt zu sein,
- eine Klinge (106a) und eine Gegenklinge (106b),
- einen Mast (108a) und einen Gegenmast (108b), die auf der Basis (102) eingerichtet sind, und
- ein erstes Antriebssystem, das dazu eingerichtet ist, mindestens einen des Masts (108a) und des Gegenmasts (108b) zwischen einer angenäherten Position, in der der Mast (108a) und der Gegenmast (108b) einander derart angenähert sind, dass sie den Stängel (52a) einklemmen, und einer entfernten Position, in der der Mast (108a) und der Gegenmast (108b) beabstandet sind, um das Durchgehen des Stängels (52a) zu erlauben, zu verschieben, und
- ein zweites Antriebssystem, das dazu eingerichtet ist, die Klinge (106a) in Drehung um die Längsachse (X) zwischen einer angenäherten Position, in der die Klinge (106a) und die Gegenklinge (106b) einander derart angenähert sind, dass der Stängel (52a) geschnitten wird, und einer entfernten Position, in der die Klinge (106a) und die Gegenklinge (106b) einander zu beiden Seiten der Längsachse (X) zugewandt angeordnet sind, zu verschieben,
Werkzeug (100, 800, 1000) **dadurch gekennzeichnet, dass** die Gegenklinge (106b) stationär in Bezug auf die Basis (102) montiert ist, dass das Werkzeug (100, 800, 1000) einen Finger (105) umfasst, der fest mit der Basis (102) verbunden ist und sich parallel zu der Längsachse (X) erstreckt, wobei die Klinge (106a) ein freies Ende entgegengesetzt zu der Basis (102) aufweist, und dass sich der Finger (105) über das freie Ende der Klinge (106a) hinaus erstreckt und einen Innenrand (104c) aufweist, der sich in Richtung des Inneren erstreckt, um das freie Ende der Klinge (106a) in entfernter Position abzudecken.

2. Werkzeug (100, 800) nach Anspruch 1, **dadurch gekennzeichnet, dass** der Finger (105) der Gegenmast (108b) ist.

3. Werkzeug (100, 800) nach einem der Ansprüche 1 oder 2, **dadurch gekennzeichnet, dass** es einen zusätzlichen Finger (107) umfasst, der fest mit der Basis (102) verbunden ist und sich parallel zu der Längsachse (X) erstreckt, wobei der Mast (108a) ein freies Ende entgegengesetzt zu der Basis (102) aufweist, und dass sich der zusätzliche Finger (107) über das freie Ende des Masts (108a) hinaus erstreckt und einen Innenrand (104c) aufweist, der sich in Richtung des Inneren erstreckt, um das freie Ende der Klinge (106a) in entfernter Position abzudecken.

4. Werkzeug (100, 800) nach einem der Ansprüche 1 bis 3, **dadurch gekennzeichnet, dass** das freie Ende des Gegenmasts (108b) und das freie Ende des Masts (108a) oder das freie Ende des zusätzlichen Fingers (107), falls vorhanden, Oberflächen aufweisen, die eine schräge Öffnung bilden.

5. Werkzeug (100, 800) nach Anspruch 3, **dadurch gekennzeichnet, dass** der Gegenmast (108b) im Bereich eines vorderen Teils (100a) des Werkzeugs (100, 800) eine erste Kontaktfläche (502a), die dazu bestimmt ist, mit dem Hauptstängel (52b) in Kontakt zu kommen, dass der Mast (108a) oder der zusätzliche Finger (107), falls vorhanden, im Bereich des vorderen Teils (100a) eine zweite Kontaktfläche (502b), die dazu bestimmt ist, mit dem Hauptstängel (52b) in Kontakt zu kommen, dass das Werkzeug (100, 800) zwischen dem Gegenmasts (108b) und dem Mast (108a) oder dem zusätzlichen Finger (107), falls vorhanden, mindestens im Bereich des vorderen Teils (100a), eine dritte Kontaktfläche (502c), die dazu bestimmt ist, mit dem Stängel (52a) in Kontakt zu kommen, umfasst, dass jede Kontaktfläche (502a-c) mit einem Kontaktsensor ausgerüstet ist, und dass jeder Kontaktsensor dazu eingerichtet ist, an eine Steuereinheit des Roboters eine Information zu übertragen, die für einen Kontakt oder ein Fehlen von Kontakt repräsentativ ist.

6. Werkzeug (100, 800) nach Anspruch 4, **dadurch gekennzeichnet, dass** der Gegenmast (108b) im Bereich der Oberfläche, die die schräge Öffnung bildet, eine vierte Kontaktfläche (502d) umfasst, dass der Mast (108a) oder der zusätzliche Finger (107), falls vorhanden, im Bereich der Oberfläche, die die schräge Öffnung bildet, eine fünfte Kontaktfläche (502e) aufweist, dass die vierte und die fünfte Kontaktfläche (502d-e) mit einem Kontaktsensor ausgerüstet sind, und dass jeder Kontaktsensor dazu eingerichtet ist, an eine Steuereinheit des Roboters eine Information zu übertragen, die für einen Kontakt oder ein Fehlen von Kontakt repräsentativ ist.

7. Werkzeug (100, 800) nach einem der Ansprüche 1 bis 3, **dadurch gekennzeichnet, dass** das erste (1100a) oder das zweite (1100b) Antriebssystem einen ersten Motor (1101a) mit einer ersten Welle (1102a) umfasst, die hohl und zu der Längsachse (X) parallel ist, und dass das andere des zweiten (1100b) oder des ersten (1100a) Antriebssystems einen zweiten Motor (1101b) umfasst, mit einer zweiten Welle (1102b) parallel zu der Längsachse (X) und in das Innere der ersten Welle (1102a) gefädelt, wobei eine der ersten Welle (1102a) oder der zweiten Welle (1102b) fest mit der Klinge (106a) verbunden ist, und die andere der zweiten Welle (1102b) oder der ersten Welle (1102a) fest mit dem Mast (108a) verbunden ist.

8. Werkzeug (100, 800) nach einem der Ansprüche 1 bis 6, **dadurch gekennzeichnet, dass** das erste Antriebssystem und das zweite Antriebssystem ein einziges Antriebssystem bilden, das Folgendes umfasst:
- einen Motor (302), der an der Basis (102) befestigt ist und eine Antriebswelle (304, 704) parallel zu der Längsachse (X) aufweist, und wobei die Klinge (106a) fest mit der Antriebswelle (304, 704) verbunden ist,
- einen Schuh (306) der um die Längsachse (X) in Bezug auf die Antriebswelle (304, 704) frei drehend montiert ist und den Mast (108a) trägt,
- ein Begrenzungssystem (404, 804), das dazu eingerichtet ist, die Drehung des Schuhs (306) in Bezug auf die Antriebswelle (304, 704) zwischen einer ersten Position und einer zweiten Position und unter Unterbinden der Drehung über diese zwei Positionen hinaus zu gestatten, und
- ein Rückstellelement (406, 806), das die Rückkehr des Schuhs (306) in die erste Position erzwingt.

9. Werkzeug (100) nach Anspruch 8, **dadurch gekennzeichnet, dass** das Begrenzungssystem (404) einen Stift (404a) umfasst, der fest mit der Antriebswelle (304) verbunden ist, und eine Nut (404b) im Kreisbogen koaxial zu der Längsachse (X) und in dem Schuh (306) hergestellt, und dass der Stift (404a) in der Nut (404b) aufgenommen ist.

10. Werkzeug (800) nach Anspruch 8, **dadurch gekennzeichnet, dass** das Begrenzungssystem (804) einen Stift (804a) umfasst, der fest mit dem Schuh (306) verbunden ist, und eine Nut (804b) im Kreisbogen koaxial zu der Längsachse (X) und in der Antriebswelle (304) hergestellt, und dass der Stift (804a) in der Nut (804b) aufgenommen ist.

11. Werkzeug (800) nach Anspruch 10, **dadurch gekennzeichnet, dass** die Antriebswelle (704) auf der Seite des Schuhs (306) eine zylindrische Nut (704a) aufweist, die zu der Längsachse (X) koaxial ist und gegenüber dem Schuh (306) mündet, und dass das Rückstellelement (806) die Form einer Drehfeder annimmt, deren Windungen in der zylindrischen Nut (704a) aufgenommen sind, und von deren zwei Zweigen der erste in einer ersten Bohrung (704b), die in der Antriebswelle (704) vorgesehen ist, und der zweite in einer zweiten Bohrung (704c), die in dem Schuh (306) vorgesehen ist, aufgenommen ist.

12. Werkzeug (100, 800) nach einem der Ansprüche 1 bis 11, **dadurch gekennzeichnet, dass** die Fläche des Masts (108a) und die Fläche des Gegenmasts (108b), die dazu vorgesehen sind, gegen den Stängel (52a) zum Anliegen zu kommen, Riffelungen (410) parallel zu der Längsachse (X) aufweisen.

13. Werkzeug (100, 800, 1000) nach Anspruch 1, **dadurch gekennzeichnet, dass** das erste Antriebssystem einen Motor und ein Messmittel umfasst, das zum Messen der von dem Motor verbrauchten Strommenge und zum Übertragen einer Information, die für diese Messung repräsentativ ist, an eine Steuereinheit des Roboters eingerichtet ist.

14. Roboter, der einen Arm und ein Werkzeug (100, 800, 1000) nach einem der vorstehenden Ansprüche an dem Arm über seine Basis (102) befestigt umfasst.

## Claims

1. Tool (100, 800, 1000) for gripping and cutting a stem (52a) carried by a main stem (52b), intended to be secured to an arm of a robot, said tool (100, 800, 1000) having a longitudinal axis (X) and comprising:
- a base (102) intended to be secured to said arm,
- a blade (106a) and a counter-blade (106b),
- a mast (108a) and a counter-mast (108b) that are arranged on the base (102), and
- a first drive system arranged to move at least one from the mast (108a) and the counter-mast (108b) between a close-together position in which the mast (108a) and the counter-mast (108b) are brought together so as to grip the stem (52a), and an apart position in which the mast (108a) and the counter-mast (108b) are separated to allow the stem (52a) to pass, and
- a second drive system arranged to move the blade (106a) in rotation about said longitudinal axis (X) between a close-together position in which the blade (106a) and the counter-blade (106b) are brought together so as to cut the stem (52a), and an apart position in which the blade (106a) and the counter-blade (106b) are disposed facing each other on either side of the longitudinal axis (X),
the tool (100, 800, 1000) being **characterised in that** the counter-blade (106b) is mounted fixedly with respect to the base (102), **in that** the tool (100, 800, 1000) comprises a finger (105) secured to the base (102) and extending parallel to the longitudinal axis (X), wherein the blade (106a) has a free end opposite to the base (102), and **in that** the finger (105) extends beyond the free end of the blade (106a) and has an interior rim (104c) that extends inwards to cover the free end of the blade (106a) in the apart position.

2. Tool (100, 800) according to claim 1, **characterised in that** the finger (105) is the counter-mast (108b).

3. Tool (100, 800) according to one of claims 1 or 2, **characterised in that** it comprises an additional finger (107) secured to the base (102) and extending parallel to the longitudinal axis (X), wherein the mast (108a) has a free end opposite to the base (102), and **in that** the additional finger (107) extends beyond the free end of the mast (108a) and has an interior rim (104c) that extends inwards to cover the free end of the blade (106a) in the apart position.

4. Tool (100, 800) according to one of claims 1 to 3, **characterised in that** the free end of the counter-mast (108b) and the free end of the mast (108a) or the free end of the additional finger (107) if such exists have surfaces that form a bevelled opening.

5. Tool (100, 800) according to claim 3, **characterised in that** the counter-mast (108b) has, at a front part (100a) of the tool (100, 800), a first contact face (502a) intended to come into contact with the main stem (52b), **in that** the mast (108a) or the additional finger (107) if such exists has, at the front part (100a), a second contact face (502b) intended to come into contact with the main stem (52b), **in that** the tool (100, 800) has, between the counter-mast (108b) and the mast (108a) or the additional finger (107) if such exists, at the front part (100a), a third contact face (502c) intended to come into contact with the stem (52a), **in that** each contact face (502a-c) is equipped with a contact sensor and **in that** each contact sensor is arranged to transmit information representing a contact or an absence of contact to a control unit of the robot.

6. Tool (100, 800) according to claim 4, **characterised in that** the counter-mast (108b) has, at the surface forming the bevelled opening, a fourth contact face (502d), **in that** the mast (108a) or the additional finger (107) if such exists has, at the surface forming the bevelled opening, a fifth contact face (502e), **in that** the fourth and fifth contact faces (502d-e) are equipped with a contact sensor and **in that** each contact sensor is arranged to transmit information representing a contact or an absence of contact to the control unit of the robot.

7. Tool (100, 800) according to one of claims 1 to 3, **characterised in that** one from the first (1100a) or the second (1100b) drive system comprises a first motor (1101a) with a first hollow shaft (1102a) parallel to the longitudinal axis (X) and **in that** the other one from the second (1100b) or first (1100a) drive system comprises a second motor (1101b) with a second shaft (1102b) parallel to the longitudinal axis (X) and fitted inside the first shaft (1102a), where one from the first shaft (1102a) or the second shaft (1102b) is secured to the blade (106a) and the other from the second shaft (1102b) or the first shaft (1102a) is secured to the mast (108a).

8. Tool (100, 800) according to one of claims 1 to 6, **characterised in that** the first drive system and the second drive system form a single drive system that comprises:
- a motor (302) secured to the base (102) and having a motor shaft (304, 704) parallel to the longitudinal axis (X) and wherein the blade (106a) is secured to the motor shaft (304, 704),
- a shoe (306) mounted so as to be able to rotate freely about the longitudinal axis (X) with respect to the motor shaft (304, 704) and carrying the mast (108a),
- a limiter system (404, 804) arranged to allow rotation of the shoe (306) with respect to the motor shaft (304, 704) between a first position and a second position and preventing rotation beyond these two positions, and
- a return element (406, 806) forcing the return of the shoe (306) into the first position.

9. Tool (100) according to claim 8, **characterised in that** the limiter system (404) comprises a pin (404a) secured to the motor shaft (304) and a groove (404b) in an arc of a circle coaxial with the longitudinal axis (X) and produced in the shoe (306), and **in that** the pin (404a) is housed in the groove (404b).

10. Tool (800) according to claim 8, **characterised in that** the limiter system (804) comprises a pin (804a) secured to the shoe (306) and a groove (804b) in an arc of a circle coaxial with the longitudinal axis (X) and produced in the motor shaft (304), and **in that** the pin (804a) is housed in the groove (804b).

11. Tool (800) according to claim 10, **characterised in that** the motor shaft (704) has, on the shoe (306) side, a cylindrical groove (704a) that is coaxial with the longitudinal axis (X) and emerges opposite the shoe (306), and **in that** the return element (806) takes the form of a torsion spring the turns of which are housed in the cylindrical groove (704a) and the two branches of which are housed, in the first case, in a first bore (704b) provided in the motor shaft (704) and, in the second case, in a second bore (704c) provided in the shoe (306).

12. Tool (100, 800) according to one of claims 1 to 11, **characterised in that** the face of the mast (108a) and the face of the counter-mast (108b) that are designed to come into abutment against the stem (52a) have serrations (410) parallel to the longitudinal axis (X).

13. Tool (100, 800, 1000) according to claim 1, **characterised in that** the first drive system comprises a motor and a measuring means arranged to measure the quantity of electric current consumed by said motor and to transmit information representing this measurement to a control unit of the robot.

14. Robot comprising an arm and a tool (100, 800, 1000) according to one of the preceding claims, secured to the arm by its base (102).
